Europäisches Patentamt

European Patent Office

Office européen des brevets

(11) Veröffentlichungsnummer: **0 150 780**
A2

# EUROPÄISCHE PATENTANMELDUNG

(21) Anmeldenummer: 85100513.2

(22) Anmeldetag: 18.01.85

(51) Int. Cl.⁴: **F 16 K 3/24**

(30) Priorität: 26.01.84 AT 259/84

(43) Veröffentlichungstag der Anmeldung: 07.08.85
Patentblatt 85/32

(84) Benannte Vertragsstaaten: **BE CH DE FR GB IT LI NL**

(71) Anmelder: **Klinger AG, Baarerstrasse 10, CH-6301 Zug (CH)**

(72) Erfinder: **Wirz, Peter, Neudorf 832, CH-5726 Unterkulm (CH)**

(74) Vertreter: **Blum, Rudolf Emil Ernst, c/o E. Blum & Co Patentanwälte Vorderberg 11, CH-8044 Zürich (CH)**

(54) **Absperrventil.**

(57)    Das Absperrventil weist einen Tauchkolben (7) auf. Dieser ist in zwei Dichtungsringen (9 und 10) gelagert, über dem oberen Dichtungsring (9) ist ein Distanzstück (12) vorgesehen, das mit einem weiteren Dichtungsring (13) zusammenwirkt. Bei geschlossenem Absperrventil dichtet der weitere Dichtungsring (13) gegen aussen. Die beim Nachspannen der Dichtungsringe (9, 10, 13) durch Drehen der Schraubverbindung (2) wirkende Presskraft ist beim weiteren Dichtungsring (13) grösser als bei den anderen Dichtungsringen (9, 10), weil seine Stirnflächen kleiner sind. Damit ist die radiale Dehnung der weiteren Dichtungsringe (9, 10) beim Nachspannen verhältnismässig klein.

- 1 -

Absperrventil
----------------

Die Erfindung bezieht sich auf ein Absperrventil mit einem einen axialen Druckausgleichskanal aufweisenden Tauchkolben, der mit zwei in die Bohrung des Ventilgehäuses unter Zwischenschaltung eines radial durchbrochenen Distanzstückes eingelassenen Dichtungsringen rechteckigen Querschnitts aus Weichstoff zusammenwirkt und der in Schliessstellung zur Absperrung des Ventildurchganges mit beiden Dichtungsringen, in Offenstellung dagegen nur mit dem oberen Dichtungsring zusammenwirkt, wobei die beiden Dichtungsringe über einen in die Gehäusebohrung eingreifenden rohrförmigen Ansatz eines Ventiloberteiles axial zusammenpressbar sind, der mit dem Gehäuse über eine nachstellbare Schraubverbindung verschiebbar verbunden ist.

Da auf diese Weise beide Stirnseiten des Tauchkolbens praktisch mit dem gleichen Druck beaufschlagt sind, müssen bei der Betätigung des Ventiles fast keine Druckkräfte, sondern nur die Reibungskräfte der Dichtungsringe überwunden werden. In Schliessstellung dichtet dabei der Dichtungsring sowohl die abgesperrte Druckdifferenz im Durchgang als auch nach aussen ab, was oftmals in bezug auf die Abdichtung nach aussen zu Schwierigkeiten führte.

Hier will die Erfindung Abhilfe schaffen. Die Erfindung, wie sie in den Ansprüchen gekennzeichnet ist, löst die Aufgabe, ein Absperrventil mit einem einen axialen Druckausgleichkanal aufweisenden, mit zwei Dichtungs-

AMS/sw
16.1.1985

EU 1228

ringen zusammenwirkenden Tauchkolben zu schaffen, bei dem ein weiterer Dichtungsring zur Abdichtung gegen aussen angeordnet ist, der zusammen mit den zwei Dichtungsringen, jedoch mit höherer Flächenpressung nachspannbar ist.

Die durch die Erfindung erreichten Vorteile sind im wesentlichen darin zu sehen, dass die einwandfreie Funktion des oberen Dichtungsringes dadurch bedeutend verbessert werden kann, dass es nur mehr die Funktion der Abdichtung der Druckdifferenz im geschlossenen Zustand übernimmt, die Abdichtung nach aussen dagegen durch einen gesonderten Dichtungsring vorgenommen wird. Insbesondere kann in den zur axialen Pressung der Dichtungsringe dienenden Kraftfluss zwischen dem Ansatz des Ventiloberteils und Gehäuse ein zusätzlicher Dichtungsring rechteckigen Querschnitts eingeschaltet sein, der mit seinem Innenmantel dichtend in eine Ausnehmung des rohrförmigen Ansatzes des Ventiloberteils eingelassen ist und mit einer Stirnfläche, vorzugsweise unter Zwischenschaltung eines ringförmigen Distanzstückes, mit dem oberen Dichtungsring zusammenwirkt. Dieser zusätzliche Ventilring übernimmt allein die Abdichtung des Ventilkanals nach aussen, wobei er mit den beiden anderen Dichtungsringen gemeinsam durch die Schraubverbindung nachstellbar axial zusammengepresst werden kann, wodurch sich die Ventilringe radial ausdehnen und die Dichtwirkung verbessert werden kann. Um eine höhere Pressung auf diesen zusätzlichen Dichtungsring als auf die beiden anderen Dichtungsringe zu gewährleisten, ist dieser in der Breite wesentlich kleiner, vorzugsweise um die Hälfte, als die beiden anderen Dichtungsringe.

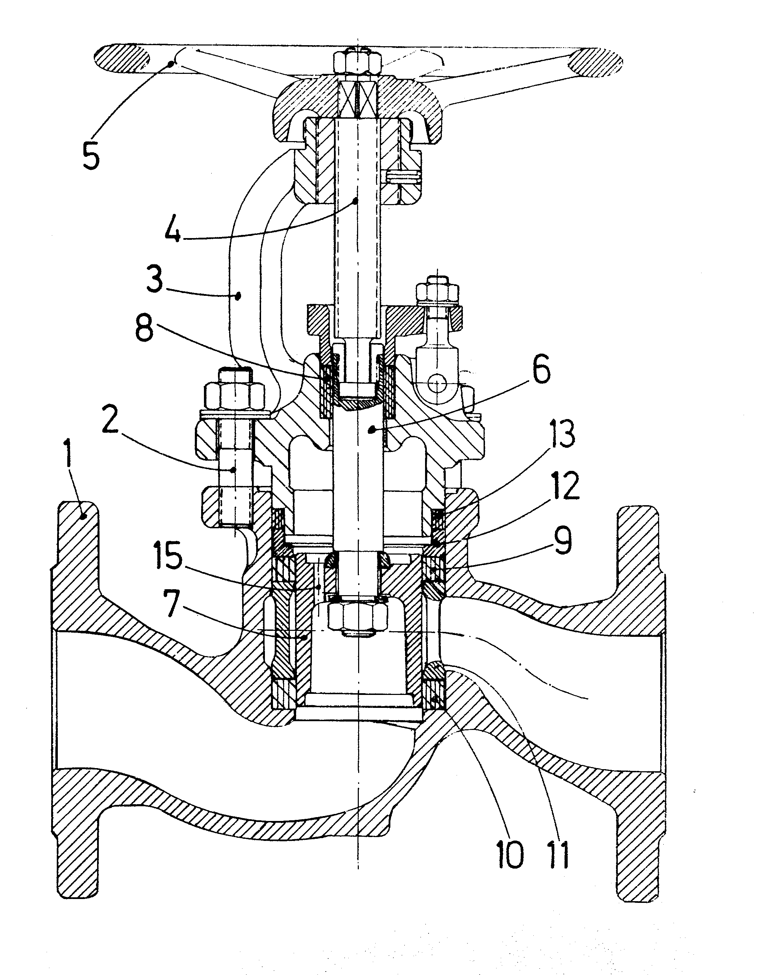

Die Erfindung wird nun anhand des in der Zeichnung im Axialschnitt dargestellten Ausführungsbeispiels näher erläutert:

Bei dem dargestellten Absperrventil ist mit dem Gehäuse 1 über eine Schraubverbindung 2 ein Ventiloberteil verbunden. In diesem ist eine über ein Handrad 5 betätigbare Schraubspindel 4 gelagert, die unter Zwischenschaltung eines Schaftes 6 mit einem Tauchkolben 7 verbunden ist. Dieser kann also durch Betätigung des Handrades 5 ohne Drehbewegung axial verschoben werden. Der Kolben 7 ist in Dichtungsringen 9 und 10 gelagert, die in das Gehäuse 1 unter Zwischenschaltung eines radial durchbrochenen Distanzstückes 11 eingesetzt sind. Über dem oberen Dichtungsring ist ein ringförmiges Distanzstück 12 vorgesehen, das mit der unteren Stirnfläche eines Dichtungsringes 13 zusammenwirkt. Dieser Dichtungsring steht mit seinem Aussenmantel mit der Bohrung des Gehäuses 1, mit seinem Innenmantel und seiner oberen Stirnfläche mit der Ausnehmung des rohrförmigen Ansatzes des Ventiloberteiles dichtend in Verbindung. Durch die nachstellbare Schraubverbindung 2 können also sowohl der untere Dichtungsring 10 als auch der obere Dichtungsring 9 und der zusätzliche Dichtungsring 13 axial zusammengepresst werden, wobei sie sich radial erweitern und dichtend mit ihren Mantelflächen an die zugeordneten Flächen anlegen. In der dargelegten Schliessstellung ist der Kolben 7 in den unteren Dichtungsring eingetaucht, wodurch er den Durchgang absperrt. Da der Kolben zum Druckausgleich einen axialen Kanal 15 aufweist, ist die Einwirkung des Druckes des absperrenden Mediums auf beide Kolbenstirnseiten praktisch gleich; allein die Fläche des mittels der Stopfbüchse 8 nach aussen abgedichteten Schaftes 6 ist nicht druckausgeglichen. Der durch den Druck bedingte Widerstand gegen die Axialbewegung ist daher recht klein und es müssen nur die Reibungskräfte der beiden Dichtungsringe 9 und 10 überwunden werden. Der obere Dichtungsring 9 dichtet ebenfalls im dargestellten Schliesszustand das abzusperrende Medium ab, die Abdichtung dieses Mediums nach aussen übernimmt dagegen der Dichtungsring 13, der infolge seiner etwa halb so grossen Stirnfläche mit einer bedeutend höheren Flächenpressung durch die Schraubverbindung 2 beaufschlagt ist. Er gibt

- 4 -

0150780

daher eine sichere Abdichtung nach aussen, ohne dass die beiden anderen Dichtungsringe zu stark zuammengepresst werden müssen, was infolge der radialen Ausdehnung dann einen erhöhten Bewegungswiderstand für den Kolben bewirken würde. Durch die erfindungsgemässe Ausbildung des Tauchkolbenventils ist die Beanspruchung des oberen Ventilringes 9 bedeutend vermindert und eine bedeutend erhöhte Lebensdauer des Ventils, d.h. der austauschbaren Dichtungsringe, gewährleistet.

0150780

Patentansprüche
----------------------------

1. Absperrventil mit einem einen axialen Druckausgleichskanal aufweisenden Tauchkolben, der mit zwei in die Bohrung des Ventilgehäuses unter Zwischenschaltung eines radial durchbrochenen Distanzstückes eingelassenen Dichtungsringen rechteckigen Querschnitts aus Weichstoff zusammenwirkt und der in Schliessstellung zur Absperrung des Ventildurchganges mit beiden Dichtungsringen, in Offenstellung dagegen nur mit dem oberen Dichtungsring zusammenwirkt, wobei die beiden Dichtungsringe über einen in die Gehäusebohrung eingreifenden rohrförmigen Ansatz eines Ventiloberteiles axial zusammenpressbar sind, der mit dem Gehäuse über eine nachstellbare Schraubverbindung verschiebbar verbunden ist, dadurch gekennzeichnet, dass der rohrförmige Ansatz des Ventiloberteils (3) gesondert gegen die Gehäusebohrung abgedichtet ist.

2. Absperrventil nach Anspruch 1, dadurch gekennzeichnet, dass in den zur axialen Pressung der Dichtungsringe (8,9) dienenden Kraftfluss zwischen dem Ansatz des Ventiloberteiles (3) und Gehäuse (1) ein zusätzlicher Dichtungsring (13) rechteckigen Querschnitts aus Weichstoff eingeschaltet ist, der mit seinem Innenmantel dichtend in eine Ausnehmung des rohrförmigen Ansatzes des Ventiloberteiles (3) eingelassen ist und mit seinem Aussenmantel mit der Gehäusebohrung und mit einer Stirnfläche, vorzugsweise unter Zwischenschaltung eines ringförmigen Distanzstückes (12), mit dem oberen Dichtungsring (9) zusammenwirkt.